# EUROPEAN PATENT APPLICATION

(11) **EP 3 177 022 A1**
(43) Date of publication of application: **07.06.2017**
(21) Application number: 16754387.5
(22) Date of filing: 21.06.2016
(51) Int. Cl.: H04N 21/231, H04N 21/258, H04N 21/274, H04N 21/654, H04N 21/234, H04N 21/2668

(54) **REMOTE CUSTOMIZED-CHANNEL CONTROL METHOD, SERVER, CLIENT AND CONTROL SYSTEM**

(30) Priority: 22.10.2015 CN 201510694686
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: ZHAO, Hui, Tianjin 300467 (CN)
(74) Representative: Bockhorni & Kollegen
(86) International application number: PCT/CN2016/086616
(87) International publication number: WO 2017/067191

(57) **Abstract**

Disclosed is a method for remotely controlling customized channels, including: receiving a data source of a customized channel uploaded by a client; conducting automatic collation regularly and excluding an unqualified data source; storing a qualified data source, and forming a customized channel source; receiving a download and/or play request raised by the client; and providing the customized channel source to the client for a user to download and/or play. The present invention also discloses a server, a client and a system for remotely controlling customized channels. According to the method, the server, the client and the system for remotely controlling customized channels provided by the present invention, the qualified customized channel source is provided to the user, a channel database is expanded, and the special needs of the user are satisfied. (Figure 1)

## Description

This application claims priority to Chinese Patent Application No. 201510694686.3, filed on October 22, 2015, the entire contents of which are incorporated herein by reference.

### TECHNICAL FIELD

The disclosure relates to the technical field of remotely controlling customized channels, and more particularly, to a method, a server, a client and a system for remotely controlling customized channels.

### BACKGROUND

A full-video TV desktop, based on a live interface, is added with a customization function. The function is mainly convenient for a user to play a customized TV source. A method which is mainly used is:

The user stores customized live sources collected in a fixedly named file according to a certain format. When the full-video TV desktop is started, the customized live sources in the file may be directly imported into a memory, saved in a program file, and arranged in a customized channel area like other live channels for the user to select and switch.

However, it is found by the inventor during the process of research and development that partial program functions of these channels cannot be used since the channels are customized. Moreover, because the customized live sources are not screened effectively, the customized live sources cannot be collected, analyzed and utilized according to requirements, so that the special demands of the user cannot be satisfied.

### SUMMARY

Based on the foregoing problems, one embodiment of the present invention is to provide a method for remotely controlling customized channels, which effectively screens a data source of a customized channel through a server, thus providing a customized channel source to a client to take full advantage of the customized channel source, so that a channel database is expanded, and the special demands of a user are satisfied. Another embodiment of the present invention also provides a server, a client and a system for remotely controlling customized channels.

According to a first aspect, the present invention provides a method for remotely controlling customized channels, including: a step of receiving data source, including: receiving a data source of a customized channel uploaded by a client; a step of excluding unqualified data source, including: regularly performing automatic collation and excluding an unqualified data source; a step of storing data source, including: storing a qualified data source, and forming a customized channel source; a step of receiving a download and/or play request, including: receiving a download and/or play request raised by the client; and a step of providing customized channel source, including: providing the customized channel source to the client for a user to download and/or play.

In one embodiment of the present invention, the step of excluding the unqualified data source further includes the following steps: a step of excluding incompatible data source, including: excluding a data source having incompatible file designation according to a format rule of a file name and excluding an illegal data source according to a denomination name of a file to obtain a compatible data source; a step of automatically playing and excluding data source, including: playing the compatible data source continuously in a loop, and excluding a data source that cannot be played to obtain the qualified data source.

In one embodiment of the present invention, the step of storing the data source further includes a step of classifying and collating, including: classifying and collating the customized channel source, and then storing the customized channel source.

One embodiment of the present invention further includes a step of regularly pushing customized channel source, including: regularly pushing the customized channel source stored to the client.

In a second aspect, one embodiment of the present invention also provides a method for remotely controlling customized channels, including: a step of uploading data source, including: providing a data source of a customized channel to a server, wherein the server conducts automatic collation on the data source regularly and excludes an unqualified data source, and a customized channel source is formed after the qualified data source is stored; a step of providing download and/or play request, including: raising a download and/or play request to the server; and a step of receiving customized channel source, including: receiving the qualified and stored customized channel source screened by the server, and supplying the customized channel source to a user to download and/or play.

One embodiment of the present invention further includes a detection step before the step of uploading the data source, including: detecting whether a mobile storage device exists in a client; if the mobile storage device is detected, then detecting whether the data source of the customized channel exists in the mobile storage device; and if the data source of the customized channel is detected in mobile storage device, then performing a step of outputting data source to upload the data source of the customized channel to the server.

One embodiment of the present invention further includes a step of regularly receiving customized channel source, including: regularly receiving the customized channel source pushed by the server.

In a third aspect, one embodiment of the present invention also provides a server for remotely controlling customized channels, including: a module for receiving data sources, configured to receive a data source of a customized channel uploaded by a client; a module for excluding unqualified data sources, configured to conduct automatic collation regularly and exclude an unqualified data source; a module for storing data sources, configured to store a qualified data source and form a customized channel source; a module for receiving download and/or play requests, configured to receive a download and/or play request raised by the client; and a module for providing customized channel sources, configured to provide the customized channel source to the client for a user to download and/or play.

In one embodiment of the present invention, the module for excluding unqualified data sources further includes: a module for excluding incompatible data sources, configured to exclude a data source having incompatible file designation according to a format rule of a file name and exclude an illegal data source according to a denomination name of a file to obtain a compatible data source; and a module for automatically playing and excluding data sources, configured to play a compatible data source continuously in a loop, and exclude a data source that cannot be played to obtain the qualified data source.

In one embodiment of the present invention, the module for storing data sources further includes a module for classifying and collating, configured to classify and collate the customized channel source, and then store the customized channel source.

One embodiment of the present invention further includes a module for regularly pushing customized channel sources, configured to regularly push the customized channel source stored to a client.

In a fourth aspect, one embodiment of the present invention also provides a client for remotely controlling customized channels, including: a module for uploading data sources, configured to provide a data source of a customized channel to a server, wherein the server conducts automatic collation on the data source regularly and excludes an unqualified data source, and a customized channel source is formed after the qualified data source is stored; a module for raising download and/or play requests, configured to raise a download and/or play request to the server; and a module for receiving customized channel sources, configured to receive the qualified and stored customized channel source screened by the server, and supply the customized channel source to a user to download and/or play.

One embodiment of the present invention further includes a detection module, configured to detect whether a mobile storage device exists in a client; if the mobile storage device is detected, then detect whether the data source of the customized channel exists in the mobile storage device; and if the data source of the customized channel is detected in mobile storage device, then perform a step of outputting data source to upload the data source of the customized channel to the server.

One embodiment of the present invention further includes a module for regularly receiving customized channel sources, configured to regularly receive the customized channel source pushed by the server.

In a fifth aspect, one embodiment of the present invention also provides a system for remotely controlling customized channels, including a server and a client; wherein the server includes: a module for receiving data sources, configured to receive a data source of a customized channel uploaded by the client; a module for excluding unqualified data sources, configured to conduct automatic collation regularly and exclude an unqualified data source; a module for storing data sources, configured to store a qualified data source and form a customized channel source; a module for receiving download and/or play requests, configured to receive a download and/or play request raised by the client; and a module for providing customized channel sources, configured to provide the customized channel source to the client for a user to download and/or play; and the client includes: a module for uploading data sources, configured to provide a data source of a customized channel to the server; a module for raising download and/or play requests, configured to raise a download and/or play request to the server; and a module for receiving customized channel sources, configured to receive the qualified and stored customized channel source screened by the server, and supply the customized channel source to a user to download and/or play.

In a sixth aspect, one embodiment of the present invention also provides a computer-readable medium, wherein the computer-readable medium is recorded with a computer program configured to execute the method for remotely controlling customized channels according to the embodiment of the present invention.

By employing the foregoing technical solution the following advantageous effects will be produced: the data source of the customized channel is provided to the server through the client, then the server screens the data source of the customized channel and stores the data source of the customized channel in the server for providing the customized channel source to the user, so that the channel database is expanded, and the special demands of the user are satisfied.

There have been more than one million full-video TV desktop users already, distributing in all provinces and municipalities throughout the country, and a high percentage of the users will use the customized channel source. This is a giant database, while collecting, analyzing and utilizing the database will greatly enrich channel resources, and satisfy the special demands of the user.

### BRIEF DESCRIPTION OF THE DRAWINGS

In order to explain the technical solutions in the detailed embodiments of the present invention more clearly, the figures used in the embodiments will be simply introduced hereinafter. It is apparent that the figures described hereinafter merely represent some embodiments of the present invention, and those having ordinary skills in the art may also obtain other figures according to these figures without going through creative work.
Figure 1 is a flow chart of a method for remotely controlling customized channels applied on a server according to one embodiment of the present invention;
Figure 2 is a flow chart of excluding an unqualified data source in a method for remotely controlling customized channels applied on a server according to another embodiment of the present invention;
Figure 3 is a block diagram of storing a data source in a method for remotely controlling customized channels applied on a server according to another embodiment of the present invention;
Figure 4 is a flow chart of a method for remotely controlling customized channels applied on a server according to another embodiment of the present invention;
Figure 5 is a flow chart of a method for remotely controlling customized channels applied on a client according to one embodiment of the present invention;
Figure 6 is a flow chart of a method for remotely controlling customized channels applied on a client according to another embodiment of the present invention;
Figure 7 is a flow chart of a method for remotely controlling customized channels applied on a client according to another embodiment of the present invention;
Figure 8 is a block diagram of a server for remotely controlling customized channels according to one embodiment of the present invention;
Figure 9 is a block diagram of a module for excluding unqualified data sources in a server for remotely controlling customized channels according to another embodiment of the present invention;
Figure 10 is a block diagram of a module for storing data sources in a server for remotely controlling customized channels according to another embodiment of the present invention;
Figure 11 is a block diagram of a server for remotely controlling customized channels according to another embodiment of the present invention;
Figure 12 is a block diagram of a client for remotely controlling customized channels according to one embodiment of the present invention;
Figure 13 is a block diagram of a client for remotely controlling customized channels according to another embodiment of the present invention; and
Figure 14 is a block diagram of a system for remotely controlling customized channels according to another embodiment of the present invention.

### DETAILED DESCRIPTION

The specific embodiments of the present invention will be described clearly and completely hereinafter with reference to the accompanying figures. Apparently, the embodiments described are some, but not all embodiments of the present invention. Other embodiments derived by those having ordinary skills in the art on the basis of the embodiments of the invention without going through creative efforts shall all fall within the protection scope of the present invention. The technical features involved in different embodiments of the present invention described herein may be combined mutually as long as no conflictions are constituted there among.

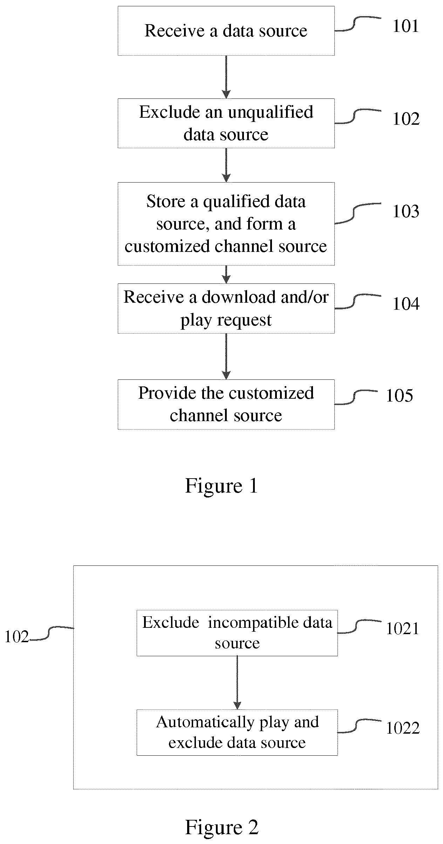

Referring to Figure 1, one embodiment of the present invention provides a method for remotely controlling customized channels, including: a step of receiving data source 101, including receiving a data source of a customized channel uploaded by a client; a step of excluding unqualified data source 102, including regularly conducting automatic collation and excluding an unqualified data source; a step of storing data source 103, including storing a qualified data source, and forming a customized channel source; a step of receiving download and/or play request 104, including receiving a download and/or play request raised by the client; and a step of providing customized channel source 105, including providing a customized channel source to the client for a user to download and/or play.

The method for remotely controlling customized channels provided by the embodiment is applied on a server, and the client may upload the data source of the customized channel acquired thereof or in a mobile storage device (USB disk, mobile hard disk) to the server. The data source may include format, domain name, website, or the like.

After receiving the data source of the customized channel, the server will screen the data source according to requirements, and exclude the unqualified data source. To be specific, automatic collation is conducted regularly and the unqualified data source is excluded according to a preset rule. The object of excluding the unqualified data source is to automatically exclude those source files that are nonstandard, sexually suggestive, terroristic, and other source files that break national laws, public order and moral, or the like, according to such data as format, domain name, website, etc. A step of excluding the unqualified data source will be introduced in details hereinafter.

Then, the qualified data source is stored to form a customized channel source, which expands a channel database on the server.

After receiving the download and/or play request raised by the client, the server provides the customized channel source to the client for the user to download and/or play. The customized channel source formed, such as a TV, will be pushed to the client finally. When the user opens the function at a terminal application, i.e., a full-video TV desktop, source files of all channels will be acquired from the server, and may be selected and added into a customized channel list for the user to view like a local customized channel.

In the present invention, the data source of the customized channel uploaded by the user is screened for multiple times by the server, so that the customized channel source satisfies various play requirements, and the source file downloaded by the client can be played smoothly. Moreover, the channel source database is expanded, and different demands of different users are satisfied.

Referring to Figure 2, in one embodiment of the present invention, the step of excluding the unqualified data source 102 further includes the following steps: a step of excluding incompatible data source 1021, including excluding a data source having incompatible file designation according to a format rule of a file name and excluding an illegal data source according to a denomination name of a file to obtain a compatible data source; a step of automatically playing and excluding data source 1022, including playing a compatible data source continuously in a loop, and excluding a data source that cannot be played to obtain the qualified data source.

Wherein, the step of excluding the data source having incompatible file designation according to the format rule of the file name refers to excluding the data source having a format that is nonstandard and does not comply with technical requirements of Android according to the format rule of the file name. The step of excluding the illegal data source according to the denomination name of the file refers to excluding those source files that are sexually suggestive, terroristic, and other source files that violate socialist ethics and break relevant national laws and regulations according to the denomination name. A denomination code or name table is compiled with reference to multiple sets of auditing codes in the industry and in combination with the code requirements of LETV. Those source files that are sexually suggestive, terroristic, relate to sensitive problems like religion and politics or the like, and those source files that break national laws and public order and moral or relate to competitors may be preliminarily excluded through the denomination code table.

Wherein, the step of automatically playing and excluding the data source refers to playing the compatible data source continuously in a loop, and excluding the data source that cannot be played by the server to obtain the qualified data source. After automatically playing the compatible data source continuously in a loop, the play of the qualified data source may be manually started to manually audit the qualified data source.

In the embodiment, the server is independently designed, wherein Aliyun and leadcloud servers are used. The server includes a server code and an android program. The server code includes an interface that receives a data source and a file uploaded by the client; after the data source collected is screened through the step of excluding the incompatible data source 1021, the compatible data source is uploaded to a storage unit of the server. The android program downloads the compatible data source file of the storage unit to play continuously in a loop (which may be combined with manual playing, and audited); after the compatible data source file is successfully played, the qualified data source is obtained, then the qualified data source is uploaded back to the storage unit for storage to form the customized channel source for the user to download.

In the embodiment of the present invention, the data source of the customized channel uploaded by the user is screened for multiple times by the server, so that the customized channel source satisfies various play requirements, and the source file downloaded by the client can be played smoothly.

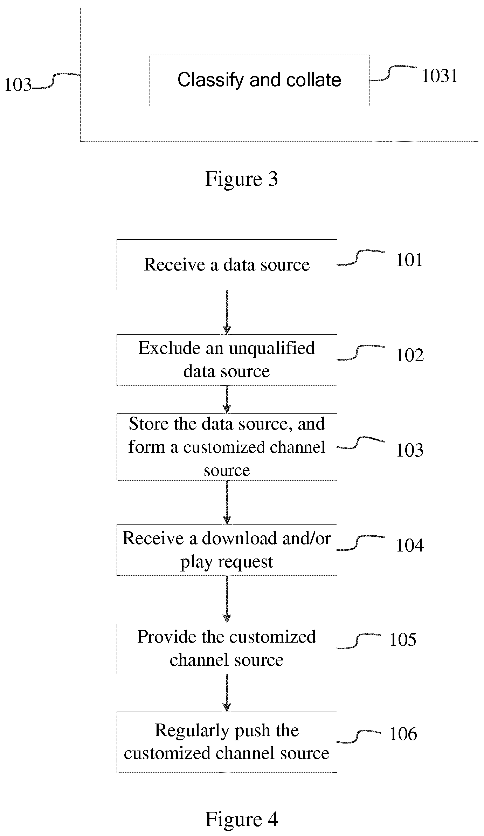

Referring to Figure 3, in one embodiment, the step of storing the data source 103 further includes a step of classifying and collating 1031, which includes classifying, collating the customized channel source and then storing the customized channel source. The step of classifying and collating 1031 is configured to classify and collate the customized channel source into a sequence table to facilitate distinguishing and storing, so that the customized channel source can be read quickly.

Referring to Figure 4, one embodiment also includes a step of regularly pushing customized channel sources 106, which includes regularly pushing the customized channel source stored to the client. The customized channel source stored and a channel source added for the server are regularly pushed to the client to update together. When the user opens the function at a terminal application, i.e., a full-video TV desktop, source files of all channels will be acquired from the server, and may be selected and added into a customized channel list for the user to view like a local customized channel. Through the manner of regularly pushing, the user is enabled to view expected programs in time.

The step of regularly pushing the customized channel source 106 may occur in any time period after the step of storing the data source 103.

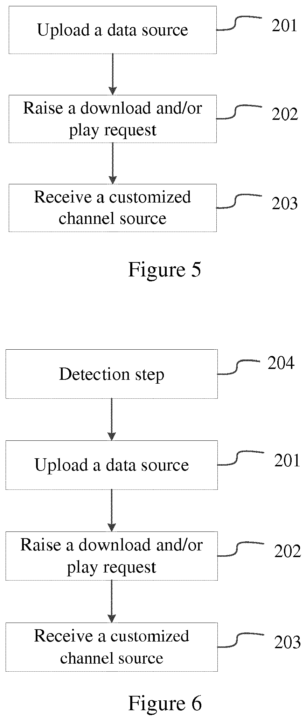

Referring to Figure 5, one embodiment of the present invention provides a method for remotely controlling customized channels, including: a step of uploading data sources 201, including providing a data source of a customized channel to a server, wherein the server conducts automatic collation on the data source regularly and excludes an unqualified data source, and a customized channel source is formed after the qualified data source is stored; a step of raising download and/or play request 202, including raising a download and/or play request to the server; and a step of receiving customized channel source 203, including receiving the qualified and stored customized channel source screened by the server, and supplying the customized channel source to a user to download and/or play.

The method for remotely controlling customized channels provided by the embodiment is applied on a client (for example, a TV, a box, etc). The client may upload the data source of the customized channel acquired thereof or in a mobile storage device (USB disk, mobile hard disk) to the server. The data source may include format, domain name, website, or the like.

After receiving the data source of the customized channel, the server will screen the data source according to requirements, and exclude the unqualified data source. Then, the qualified data source is stored to form a customized channel source, which expands a channel database on the server.

When the user operators, the client raises a download and/or play request to the server, then the server provides the customized channel source to the client for the user to download and/or play. The customized channel source formed, such as a TV, will be pushed to the client finally. When the user opens the function at a terminal application, i.e., a full-video TV desktop, source files of all channels will be acquired from the server, and may be selected and added into a customized channel list for the user to view like a local customized channel.

In the present invention, the data source of the customized channel is provided to the server through the client, then the data source of the customized channel uploaded by the user is screened for multiple times by the server, so that the customized channel source obtained satisfies various play requirements, and the source file downloaded by the client can be played smoothly. Moreover, the channel source database is expanded, and different demands of different users are satisfied.

Referring to Figure 6, before the step of uploading the data source 201, one embodiment further includes a detection step 204, including detecting whether a mobile storage device exists in a client; if the mobile storage device is detected, then detecting whether the data source of the customized channel exists in the mobile storage device; and if the data source of the customized channel is detected in mobile storage device, then performing a step of outputting data source 201 to upload the data source of the customized channel to the server. The mobile storage device may be such a storage device as a USB disk, a mobile hard disk, or the like, that facilitates the user to upload a customized channel data source according to the hobbies thereof, so that different demands are satisfied.

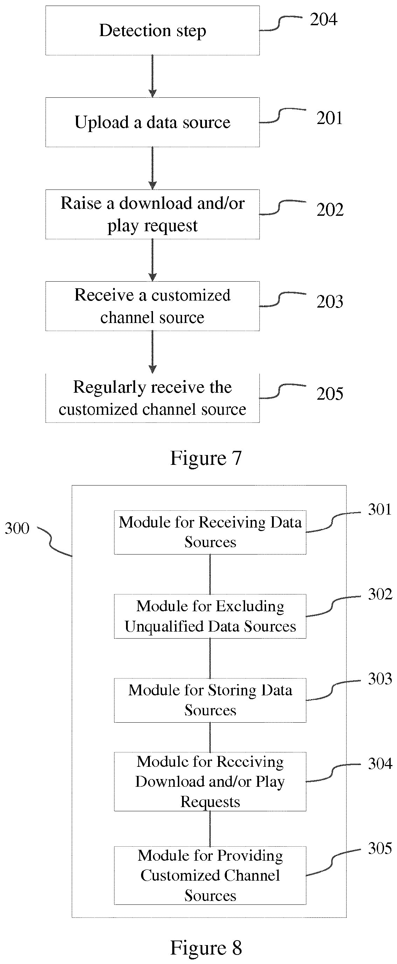

Referring to Figure 7, one embodiment further includes a step of regularly receiving customized channel sources 205, including regularly receiving the customized channel source pushed by the server. The step of regularly receiving the customized channel source 205 may occur in any time period, and is configured to receive the customized channel source pushed regularly by the server and a channel source added for the server and provided together with the customized channel source to implement regular updating. Through the manner of regularly pushing, the user is enabled to view expected programs in time.

Referring to Figure 8, one embodiment of the present invention provides a server for remotely controlling customized channels 300, including: a module for receiving data sources 301, configured to receive a data source of a customized channel uploaded by a client; a module for excluding unqualified data sources 302, configured to conduct automatic collation regularly and exclude an unqualified data source; a module for storing data sources 303 configured to store a qualified data source, and form a customized channel source; a module for receiving download and/or play requests 304, configured to receive a download and/or play request raised by the client; and a module for providing customized channel sources 305, configured to provide the customized channel source to the client for a user to download and/or play.

The client may upload the data source of the customized channel acquired by the client or in a mobile storage device (USB disk, mobile hard disk). The data source may include format, domain name, website, or the like. The module for receiving data sources 301 is configured to receive the data source of the customized channel above.

The server 300 after receiving the data source of the customized channel, will screen the data source according to requirements, and exclude the unqualified data source through the module for excluding unqualified data sources 302. To be specific, automatic collation is conducted regularly and the unqualified data source is excluded according to a preset rule. The object of excluding the unqualified data source is to automatically exclude those source files that are nonstandard, sexually suggestive, terroristic, and other source files that break national laws, public order and moral, or the like, according to such data as format, domain name, website, etc. A step of excluding the unqualified data source will be introduced in details hereinafter.

Then, the qualified data source is stored in the module for storing data sources 303 to form a customized channel source, which expands a channel database on the server.

After the module for receiving download and/or play requests 304 receives the download and/or play request raised by the client, the server 300 provides the customized channel source to the client for the user to download and/or play through the module for providing customized channel sources 305. The customized channel source formed, such as a TV, will be pushed to the client finally. When the user opens the function at a terminal application, i.e., a full-video TV desktop, source files of all channels will be acquired from the server, and may be selected and added into a customized channel list for the user to view like a local customized channel.

In the present invention, the data source of the customized channel uploaded by the user is screened for multiple times by the server, so that the customized channel source satisfies various play requirements, and the source file downloaded by the client can be played smoothly. Moreover, the channel source database is expanded, and different demands of different users are satisfied.

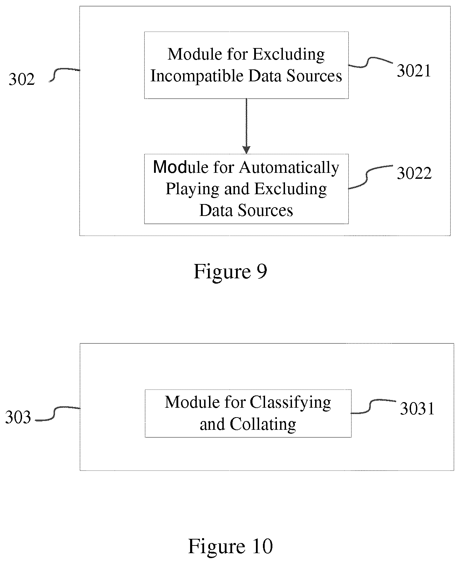

Referring to Figure 9, in one embodiment, the module for excluding unqualified data sources 302 further includes: a module for excluding incompatible data sources 3021, configured to exclude a data source having incompatible file designation according to a format rule of a file name and exclude an illegal data source according to a denomination name of a file to obtain a compatible data source; and a module for automatically playing and excluding data sources 3022, configured to play a compatible data source continuously in a loop, and exclude a data source that cannot be played to obtain the qualified data source.

The module for excluding incompatible data sources 3021 excludes an incompatible data source according to a format rule of a file name and a denomination name of a file to obtain a compatible data source.

Wherein, the step of excluding the data source having incompatible file designation according to the format rule of the file name refers to excluding the data source having a format that is nonstandard and does not comply with technical requirements of Android according to the format rule of the file name. The step of excluding the illegal data source according to the denomination name of the file refers to excluding those source files that are sexually suggestive, terroristic, and other source files that violate socialist ethics and break relevant national laws and regulations according to the denomination name. A denomination code or name table is compiled with reference to multiple sets of auditing codes in the industry and in combination with the code requirements of LETV. Those source files that are sexually suggestive, terroristic, relate to sensitive problems like religion and politics or the like, and those source files that break national laws and public order and moral or relate to competitors may be preliminarily excluded through the denomination code table.

Wherein, the module for automatically playing and excluding data sources 3022 automatically plays the compatible data source continuously in a loop through the server, and excludes the data source that cannot be played by the server to obtain the qualified data source. After playing the compatible data source continuously in a loop, the play of the qualified data source may be manually started to manually audit the qualified data source.

In the embodiment, the server 300 is independently designed, wherein Aliyun and leadcloud servers are used. The server includes a server code and an android program. The server code includes an interface that receives a data source and a file uploaded by the client; after the data source collected is screened through the module for excluding incompatible data sources 3021, the compatible data source is uploaded to a storage unit of the server. The android program downloads the compatible data source file of the storage unit to play continuously in a loop (which may be combined with manual playing, and audited); after the compatible data source file is successfully played, the qualified data source is obtained, then the qualified data source is uploaded back to the storage unit for storage to form the customized channel source for the user to download.

In the embodiment of the present invention, the data source of the customized channel uploaded by the user is screened for multiple times by the server, so that the customized channel source satisfies various play requirements, and the source file downloaded by the client can be played smoothly.

Referring to Figure 10, in one embodiment, the module for storing data sources 303 further includes a module for classifying and collating 3031 configured to classify and collate the customized channel source, and then store the customized channel source. The module for classifying and collating 3031 is configured to classify and collate the customized channel source into a sequence table to facilitate distinguishing and storing, so that the customized channel source can be read quickly.

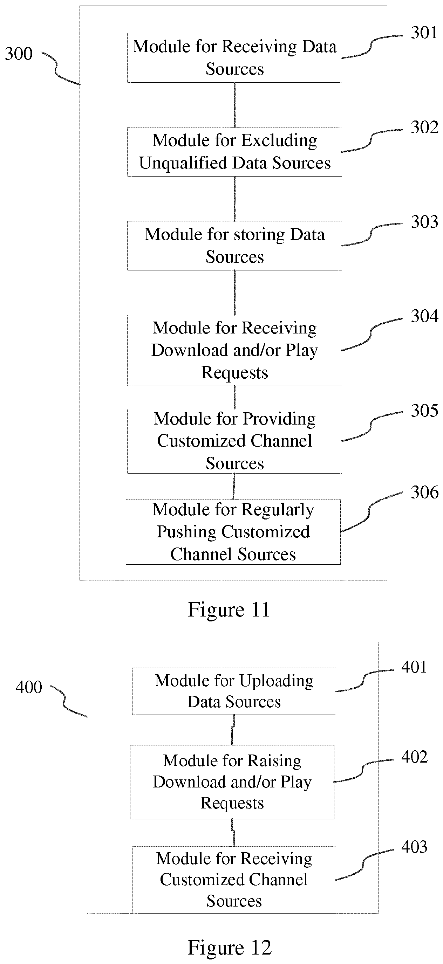

Referring to Figure 11, one embodiment further includes a module for regularly pushing customized channel sources 306 configured to regularly push the customized channel source stored to the client. The customized channel source stored and a channel source added for the server are regularly pushed to the client to update together. When the user opens the function at a terminal application, i.e., a full-video TV desktop, source files of all channels will be acquired from the server, and may be selected and added into a customized channel list for the user to view like a local customized channel. Through the manner of regularly pushing, the user is enabled to view expected programs in time.

Referring to Figure 12, one embodiment of the present invention provides a client for remotely controlling customized channels 400, including: a module for uploading data sources 401 configured to provide a data source of a customized channel to a server, wherein the server conducts automatic collation on the data source regularly and excludes an unqualified data source, and a customized channel source is formed after the qualified data source is stored; a module for raising download and/or play requests 402, configured to raise a download and/or play request to the server; and a module for receiving customized channel sources 403, configured to receive the qualified and stored customized channel source screened by the server, and supply the customized channel source to a user to download and/or play.

The client 400 may upload the data source of the customized channel acquired by the client or in a mobile storage device (USB disk, mobile hard disk) to the server through the module for uploading data sources 401. The data source may include format, domain name, website, or the like.

After receiving the data source of the customized channel, the server will screen the data source according to requirements, and exclude the unqualified data source. Then, the qualified data source is stored to form a customized channel source, which expands a channel database on the server.

When the user operates, the client 400 raises a download and/or play request to the server through the module for raising download and/or play requests 402, then the server provides the customized channel source to the client, and the client 400 receives the foregoing customized channel source through the module for receiving customized channel sources 403 for the user to download and/or play. The customized channel source formed, such as a TV, will be pushed to the client finally. When the user opens the function at a terminal application, i.e., a full-video TV desktop, source files of all channels will be acquired from the server, and may be selected and added into a customized channel list for the user to view like a local customized channel.

In the present invention, the data source of the customized channel is provided to the server through the client, then the data source of the customized channel uploaded by the user is screened for multiple times by the server, so that the customized channel source obtained satisfies various play requirements, and it is ensured that the source file downloaded by the client can be played smoothly. Moreover, the channel source database is expanded, and different demands of different users are satisfied.

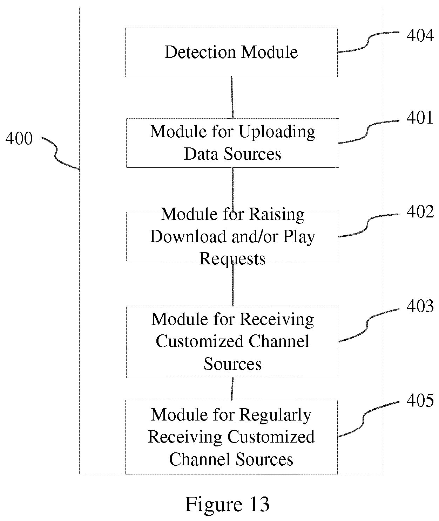

Referring to Figure 13, one embodiment further includes a detection module 404 configured to detect whether a mobile storage device exists in a client; if the mobile storage device is detected, then detect whether the data source of the customized channel exists in the mobile storage device; and if the data source of the customized channel is detected in mobile storage device, then perform a step of outputting data source to upload the data source of the customized channel to the server. The mobile storage device may be such a storage device as a USB disk, a mobile hard disk, or the like, that facilitates the user to upload a customized channel data source according to the hobbies thereof, so that different demands are satisfied.

Referring to Figure 13, one embodiment further includes a module for regularly receiving customized channel sources 405 configured to regularly receive a customized channel source pushed by the server. The module for regularly receiving customized channel sources 405 is configured to receive the customized channel source regularly pushed by the server and a channel source added for the server and provided together with the customized channel source to implement regular updating. Through the manner of regularly pushing, the user is enabled to view expected programs in time.

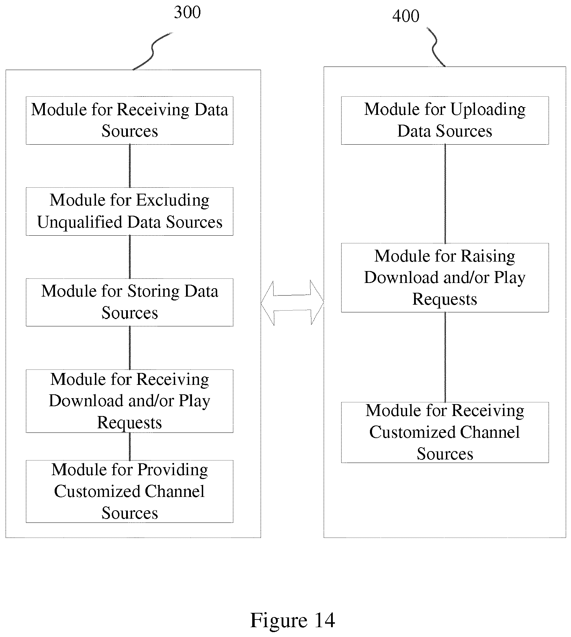

Referring to Figure 14, one embodiment of the present invention provides a system for remotely controlling customized channels, including a server 300 and a client 400.

Wherein, the server includes: a module for receiving data sources, configured to receive a data source of a customized channel uploaded by the client; a module for excluding unqualified data sources, configured to conduct automatic collation regularly and exclude an unqualified data source; a module for storing data sources, configured to store a qualified data source, and form a customized channel source; a module for receiving download and/or play requests, configured to receive a download and/or play request raised by the client; and a module for providing customized channel sources, configured to provide the customized channel source to the client for a user to download and/or play; and the client includes: a module for uploading data sources, configured to provide a data source of a customized channel to the server; a module for raising download and/or play requests, configured to raise a download and/or play request to the server; and a module for receiving customized channel sources, configured to receive the qualified and stored customized channel source screened by the server, and supply the customized channel source to a user to download and/or play.

In the present invention, the data source of the customized channel is provided to the server through the client, then the data source of the customized channel uploaded by the user is screened for multiple times by the server, so that the customized channel source obtained satisfies various play requirements, and it is ensured that the source file downloaded by the client can be played smoothly. Moreover, the channel source database is expanded, and different demands of different users are satisfied.

It may be understood by those having ordinary skills in the art that the all or part flows of implementing the methods in the foregoing embodiments may be finished through relevant hardware instructed by a computer program. The program may be stored in a mobile device or a computer readable storage medium, and the program while performing includes one or a combination of the flows of the embodiments according to the methods above. Based on such understanding, the foregoing technical solutions essentially, or the part contributing to the prior art, or the part of the technical solution may be implemented in the form of a software product. The computer software product may be stored in a storage medium, and includes several instructions for instructing a mobile terminal (which may be a personal computer, a server, or a network device, a mobile phone so on) to execute the all or a part of steps of the method according to each embodiment of the present invention. While the forementioned storage medium includes: any medium that is capable of storing program codes, such as a USB disk, a mobile hard disk, a read-only memory (ROM, Read-Only Memory), a random access memory (RAM, Random Access Memory), a magnetic disk, or an optical disk.

The above embodiments are for purposes of illustration and description to the technical solution of the present invention merely, but are not intended to limit the present invention. Although the embodiments of the present invention has been illustrated in detail according to the foregoing embodiments, those having ordinary skills in the art should understand that modifications can still be made to the technical solutions recited in various embodiments described above, or equivalent substitutions can still be made to a part of technical features thereof, and these modifications or substitutions will not make the essence of the corresponding technical solutions depart from the spirit and scope of the claims.

## Claims

1. A method for remotely controlling customized channels, comprising:
receiving a data source of a customized channel uploaded by a client;
conducting automatic collation regularly and excluding an unqualified data source;
storing a qualified data source, and forming a customized channel source;
receiving a download and/or play request raised by the client; and
providing the customized channel source to the client for a user to download and/or play.

2. The method for remotely controlling customized channels according to claim 1, wherein the step of conducting automatic collation regularly and excluding the unqualified data source further comprises the following steps:
excluding a data source having incompatible file designation according to a format rule of a file name and excluding an illegal data source according to a denomination name of a file to obtain a compatible data source; and
playing the compatible data source continuously in a loop, and excluding a data source that cannot be played to obtain the qualified data source.

3. The method for remotely controlling customized channels according to claim 1, wherein the step of storing the qualified data source and forming the customized channel source further comprises: classifying and collating the customized channel source, and then storing the customized channel source.

4. The method for remotely controlling customized channels according to claim 1, further comprising: regularly pushing the customized channel source stored to the client.

5. A method for remotely controlling customized channels, comprising:
providing a data source of a customized channel to a server, wherein the server conducts automatic collation on the data source regularly and excludes an unqualified data source, and a customized channel source is formed after the qualified data source is stored;
raising a download and/or play request to the server; and
receiving the qualified and stored customized channel source screened by the server, and supplying the customized channel source to a user to download and/or play.

6. The method for remotely controlling customized channels according to claim 5, wherein before the step of providing the data source of the customized channel to the server, wherein the server conducts automatic collation on the data source regularly and excludes the unqualified data source, and the customized channel source is formed after the qualified data source is stored, the method further comprises: detecting whether a mobile storage device exists in a client; if the mobile storage device is detected, then detecting whether the data source of the customized channel exists in the mobile storage device; and if the data source of the customized channel is detected in mobile storage device, then performing a step of outputting data source to upload the data source of the customized channel to the server.

7. The method for remotely controlling customized channels according to claim 5, further comprising: regularly receiving the customized channel source pushed by the server.

8. A server for remotely controlling customized channels, comprising:
a module for receiving data sources, configured to receive a data source of a customized channel uploaded by a client;
a module for excluding unqualified data sources, configured to conduct automatic collation regularly and exclude an unqualified data source;
a module for storing data sources, configured to store a qualified data source and form a customized channel source;
a module for receiving download and/or play requests, configured to receive a download and/or play request raised by the client; and
a module for providing customized channel sources, configured to provide the customized channel source to the client for a user to download and/or play.

9. The server for remotely controlling customized channels according to claim 8, wherein the module for excluding unqualified data sources further comprises:
a module for excluding incompatible data sources, configured to exclude a data source having incompatible file designation according to a format rule of a file name and exclude an illegal data source according to a denomination name of a file to obtain a compatible data source; and
a module for automatically playing and excluding data sources, configured to play a compatible data source continuously in a loop, and exclude a data source that cannot be played to obtain the qualified data source.

10. The server for remotely controlling customized channels according to claim 8, wherein the module for storing data sources further comprises a module for classifying and collating, configured to classify and collate the customized channel source, and then store the customized channel source.

11. The server for remotely controlling customized channels according to claim 8, further comprising a module for regularly pushing customized channel sources, configured to regularly push the customized channel source stored to the client.

12. A client for remotely controlling customized channels, comprising:
a module for uploading data sources, configured to provide a data source of a customized channel to a server, wherein the server conducts automatic collation on the data source regularly and excludes an unqualified data source, and a customized channel source is formed after the qualified data source is stored;
a module for raising download and/or play requests, configured to raise a download and/or play request to the server; and
a module for receiving customized channel sources, configured to receive the qualified and stored customized channel source screened by the server, and supply the customized channel source to a user to download and/or play.

13. The client for remotely controlling customized channels according to claim 12, further comprising a detection module, configured to detect whether a mobile storage device exists in a client; if the mobile storage device is detected, then detect whether the data source of the customized channel exists in the mobile storage device; and if the data source of the customized channel is detected in mobile storage device, then perform a step of outputting data source to upload the data source of the customized channel to the server.

14. The client for remotely controlling customized channels according to claim 12, further comprising a module for regularly receiving customized channel sources configured to regularly receive the customized channel source pushed by the server.

15. A system for remotely controlling customized channels, comprising a server and a client;
wherein, the server comprises:
a module for receiving data sources, configured to receive a data source of a customized channel uploaded by the client;
a module for excluding unqualified data sources, configured to conduct automatic collation regularly and exclude an unqualified data source;
a module for storing data sources, configured to store a qualified data source and form a customized channel source;
a module for receiving download and/or play requests, configured to receive a download and/or play request raised by the client; and
a module for providing customized channel sources, configured to provide the customized channel source to the client for a user to download and/or play;
the client comprises:
a module for uploading data sources, configured to provide a data source of a customized channel to the server;
a module for raising download and/or play requests, configured to raise a download and/or play request to the server; and
a module for receiving customized channel sources, configured to receive the qualified and stored customized channel source screened by the server, and supply the customized channel source to a user to download and/or play.

16. A computer-readable medium, wherein the computer-readable medium is recorded with a computer program configured to execute the method for remotely controlling customized channels according to any one of claims 1 to 7.
